(19) **Europäisches Patentamt**

**European Patent Office**

**Office européen des brevets**

(11) **EP 0 783 593 B1**

(12) **EUROPEAN PATENT SPECIFICATION**

(45) Date of publication and mention
of the grant of the patent:
**12.12.2001 Bulletin 2001/50**

(51) Int Cl.[7]: **C22B 7/02**, C22B 19/30,
C22B 19/28, C01G 9/02

(21) Application number: **95933749.4**

(22) Date of filing: **08.09.1995**

(86) International application number:
**PCT/US95/11367**

(87) International publication number:
**WO 96/08585 (21.03.1996 Gazette 1996/13)**

(54) **METHOD FOR RECOVERING METAL AND CHEMICAL VALUES**

VERFAHREN ZUR GEWINNUNG VON METALLEN UND CHEMISCHER WERTE

PROCEDE POUR LA RECUPERATION DE METAUX ET D'AUTRES COMPOSES CHIMIQUES UTILES

(84) Designated Contracting States:
**AT BE CH DE DK ES FR GB GR IE IT LI LU MC NL PT SE**

(30) Priority: **08.09.1994 US 302179**
**02.12.1994 US 348446**
**21.12.1994 US 360394**
**31.01.1995 US 380950**
**10.02.1995 WOPCT/US95/01893**
**11.05.1995 US 439352**

(43) Date of publication of application:
**16.07.1997 Bulletin 1997/29**

(73) Proprietor: **Recycling Technologies, Inc.**
**Nashville, Tennessee 37219 (US)**

(72) Inventors:
• **MYERSON, Allan, S.**
**Brooklyn, NY 11205 (US)**
• **BURROWS, Charles, A.**
**Atlanta, GA 30345 (US)**
• **SANZENBACHER, Charles**
**Charlotte, NC 28210 (US)**
• **DIBELLA, Paul, R.**
**Ball Ground, GA 30107 (US)**

(74) Representative: **Volmer, Johannes Cornelis et al**
**van Exter Polak & Charlouis B.V.,**
**P.O. Box 3241**
**2280 GE Rijswijk (NL)**

(56) References cited:
**EP-A- 0 158 627**    **EP-A- 0 551 155**
**GB-A- 1 435 296**    **US-A- 3 849 121**
**US-A- 4 376 043**    **US-A- 5 208 004**

• **'Direct Reduced Iron', August 1982, IRON AND STEEL SOCIETY TN707D56 * page 45, column 2, line 33 - line 53 ***

**Description**

**BACKGROUND OF THE INVENTION**

**1. Field of the Invention**

The present invention relates generally to a process for the recovery of metal and chemical values from industrial waste streams comprising zinc compounds and iron compounds. The present invention relates more specifically to a process subjecting a waste materials stream comprising zinc compounds and iron compounds, such as electric arc furnace (EAF) dust, to a combination of leaching and reducing steps, which enable the separation and recovery from the waste materials stream of zinc oxide, zinc metal, iron and carbon compounds, lead, and cadmium.

A useful application of the present invention is a process in which additional waste material streams, such as iron-rich and iron-poor wastes, are combined with a waste materials stream typically comprising zinc compounds and iron compounds. The combined waste product is subjected to a combination of steps including leaching, resulting in a precipitate comprising iron oxides, which then is subjected to roasting, resulting in an enriched direct reduced iron compound which can be used as a feedstock for steel mills. During the recovery process, carbon compounds can be added to the waste stream, and a cake product produced from the undissolved iron and carbon compounds, which also can be used as a feedstock for steel mills.

**2. Prior Art**

The treatment of waste metal process dust in general is known in the art. Specifically, the recovery of zinc oxide and other zinc products is known. However, a complete continuous recycle treatment of waste metal process dust, which results in the recovery of chemical and metal values and the production of a feedstock for steel mills, is not known.

Zinc oxide, which has a variety of uses, is found in commercial by-products including waste material streams such as fly ash and flue dust. Known methods for recovering zinc oxides, including recovering zinc oxide from industrial waste materials, include leaching with mineral acid, caustic soda, ammonium hydroxide, and ammonium carbonate solutions. These methods have low yields of zinc oxide and typically do not recover pure zinc oxide, the recovered zinc oxide being contaminated with other metal salts. To obtain pure zinc oxide, subsequent roasting and evaporation processes were necessary.

U.S. Patent No. 3,849,121 to Burrows, now expired but which was assigned to a principal of the assignee of the present invention, discloses a batch method for the selective recovery of zinc oxide from industrial waste. The Burrows method comprises leaching a waste material with an ammonium chloride solution at elevated temperatures, separating iron from the solution, treating the solution with zinc metal and cooling the solution to precipitate zinc oxide. The material obtained in the last step is a mixture of a small amount of zinc oxide, hydrated zinc phases which can include hydrates of zinc oxide and zinc hydroxide, as well as other phases and a large amount of diamino zinc dichloride $Zn(NH_3)_2Cl_2$ or other similar compounds containing zinc and chlorine ions. Currently, the Burrows method is not economically viable because of environmental guidelines established subsequent to the issuance of the Burrows patent.

The first step in the Burrows patent is the treating of the EAF dust with an ammonium chloride solution. As twenty to fifty percent of the zinc present in the Burrows dust is a iron-zinc complex (known as a spinel) which cannot be leached by the ammonium chloride solution, the Burrows process therefore cannot leach and recover a significant portion of zinc present in the EAF dust. The second step in the Burrows process is cementation with zinc dust. Zinc dust causes an electrochemical reaction which causes the lead and cadmium to deposit on the zinc particles. Burrows does not teach the need to remove the lead and cadmium in this step efficiently without using a large amount of zinc. The third step in the Burrows patent cools the filtrate from the cementation process to obtain zinc oxide crystals. However, Burrows does not produce zinc oxide of any degree of purity; x-ray diffraction figures clearly show that upon crystallization there is a mixture of many phases. Burrows indicates no method of cooling or controlling either purity or size, and the particles produced do not meet commercial requirements. Further, a significant portion of the ammonium chloride is lost in the crystal washing step when the diamino zinc dichloride decomposes.

Waste metal process dust typically has varying amounts of lead, cadmium and other metals contained in the dust. For various reasons, it is desirable to remove such metals from the waste metal dust, for example to recycle the lead and cadmium and/or to prevent introduction of the lead and cadmium into the atmosphere. The Burrows patent includes a method for removing dissolved lead and cadmium from the ammonium chloride solutions which have been used to treat the waste metal dust by the addition of powdered zinc dust to the ammonium chloride solutions. The resulting electrochemical reaction forms elemental lead deposits on the surface of the powdered zinc dust. For this reaction to proceed, a large surface area of zinc initially must be present because as the lead covers the zinc dust particle, the particle becomes no longer available for the electrochemical reaction. For this reason, very fine powder is used which, unfortunately, immediately aggregates to form large clumps which sink to the bottom of the vessel. Rapid agitation does not prevent this from happening. Because of the aggregation of zinc, a large amount of zinc must be added to remove all of the lead, a poor practice for economic reasons. Further, if it is desired to separate the lead and some cadmium from the zinc so that all of these metals can be sold or reused, the higher the zinc concentration in the metals, the larger the mass to be processed per unit mass of zinc.

U.S. Patent No. 4,071,357 to Peters discloses a method for recovering metal values which includes a steam distillation step and a calcining step to precipitate zinc carbonate and to convert the zinc carbonate to zinc oxide, respectively. Peters further discloses the use of a solution containing approximately equal amounts of ammonia and carbon to leach the flue dust at room temperature, resulting in the extraction of only about half of the zinc in the dust, almost 7% of the iron, less than 5% of the lead, and less than half of the cadmium. Steam distillation precipitates zinc carbonate, other carbonates and iron impurities, whereas temperature lowering advantageously precipitates a number of crystalline zinc compounds. Steam distillation also increases system temperature, driving off ammonia and carbon dioxide, resulting in the precipitation of iron impurities and then zinc carbonate and other dissolved metals.

The solubility of zinc and zinc oxide is relatively high in $NH_4Cl$ solution, and the solubility of zinc and zinc oxide in the solution declines rapidly with temperature, which is the basis for the crystallization-based separation which is used later in the present process. The rate of the leaching is a function of the difference between the zinc concentration in solution and the saturation concentration; the higher the saturation concentration the more rapid the leaching. The present process leaches for only 1 hour, while the Peters process leaches for at least several hours.

Lead and lead oxide, as well as cadmium and cadmium oxide, are soluble in the ammonium chloride solution while iron oxide is virtually insoluble. During the leaching process of the present invention, 95-100% of the zinc present as zinc oxide is extracted, compared to about 55% in Peters; 50-70% of the lead present is removed, compared to less than 5% in Peters: and 50-70% of the cadmium is removed, compared to less than half in Peters. Peters indicates that his residue, which is high in lead and is a hazardous waste, is discarded. By leaching out a significant portion of the lead and cadmium, the present process produces a material which can be used by the steel producer as they use scrap metal. Likewise, the present process enables separation and recovery of substantially pure lead and cadmium, thereby reducing the overall volume of waste and reclaiming materials having potential economic value.

Another process offered by Engitec Impianti SpA, of Milan, Italy proports to recover zinc metal and lead cement using an electrowinning technology to extract the metal from the soluble salt in an electrolytic cell. In the Engitec process, EAF flue dust is leached with a spent electrolyte, such as ammonium chloride, which dissolves the zinc, lead, copper and cadmium in the EAF dust into solution while leaving the iron in solid form. The solution containing the dissolved zinc is placed in an electrolytic cell which draws the zinc from the solution onto a cathode plate, while the other heavy metals are filtered out in solid form into cement cakes. Apparently, the electrolysis of the zinc amino occurs in a conventional open cell using a titanium permanent blank cathode and a proprietary graphite anode. In the electrolysis cell, the zinc plates on the titanium cathode. However, the deposition time for the zinc is 24 to 48 hours, depending on the current density. The electrolysis cell consumes ammonia and evolves nitrogen and to maintain the pH of the electrolyte in the desired range of 6 to 6.5, additional ammonium must be added. to the cell in the range of 180kg per tonne of product zinc. In effect, the Engitec process takes the product solution from the Burrows process and subjects it to electrowinning.

The use of an electrolysis cell adds costs to the process. The Engitec process also results in the formation of metallic zinc which has less value than zinc oxide. The residue removed from the Engitec process comprises zinc ferrite which is an additional impurity for any future process. It would be more advantageous to obtain a residue comprising primarily iron oxide with no zinc ferrite or other impurities, or only an insignificant amount of such other impurities.

U.S. Patent No. 4,292,147 to Fray discloses and claims a method for the electrodeposition of cadmium or zinc from chloride solutions derived from chlorine leaching of materials. An aqueous solution having 15 to 30% by weight of zinc or cadmium chloride is electrolyzed at a pH of 2 to 3.5 at a temperature of below 35°C with gas agitation at a current density above $100A/m^2$ to form coherent zinc or cadmium at the cathode. A typical zinc containing material such as flue dust is leached with a saturated chlorine solution, preferably in the presence of chlorine hydrate. The zinc chloride solution preferably contains 20 to 30% by weight zinc or cadmium chloride and up to 20% by weight alkaline metal or ammonium chloride. The electrolysis preferably is carried out at 0°C to 9°C and above $2500A/m^2$ with intermittent current reversal. Chlorine hydrate liberated at the anode may be recycled to affect leaching.

US Patent No. 5,208,004 to Myerson discloses a method for the recovery of zinc oxide from waste materials of various components, including zinc, lead, iron and cadmium. According to this known method the waste material is leached by an ammonium chloride solution at elevated temperature to form a product solution comprising dissolved constituents such as zinc and zinc oxide. Any iron oxide present remains in an undissolved precipitate. After separating this product solution from the undissolved precipitate zinc metal is added to the product solution in order to remove lead and cadmium ions from the solution as precipitates of lead and cadmium metals. Thereafter the solution is cooled such that zinc compounds will precipitate, which are further treated to obtain essentially pure zinc oxide.

## BRIEF SUMMARY OF THE INVENTION

The method according to the invention is defined in claim 1. Preferred embodiments are defined in the dependent claims.

The present invention is a method which recovers iron-containing compounds, zinc oxide, and other chemical and metal values from waste materials. Along with the zinc oxide, zinc metal can be recovered, along with values of other metallic elements contained in the waste material such as lead, silver, and cadmium. The solutions used in the process are recycled such that the process does not have any liquid wastes. The solids recovered from the process all can be used in other processes. Several such residues, including the iron oxide cake, lead metal residue, and cadmium are of such quality that they can be used directly as raw material for production of a variety of goods.

Briefly, the preferred waste material, typically a fly ash or flue dust such as EAF, is leached with an ammonium chloride solution resulting in a product solution comprising dissolved zinc and/or zinc oxide and other metal oxides and undissolved materials comprising iron oxides. An ammonium salt in which the negative ion will form insoluble compound with calcium can be added to remove calcium compound impurities, which precipitate out from the product solution. The product solution and the undissolved materials are separated, with both the product solution and the undissolved materials being further treated to recover valuable components. Zinc metal is added to the product solution, preferably at 90°C or higher, to cement out any lead and cadmium contained in the product solution. A dispersant also can be added to prevent the zinc metal from flocculating. The remaining product solution is rich in zinc compounds.

The remaining product solution then can be treated in several manners. For example, the remaining product solution can be cooled to between about 20°C and 60°C thereby precipitating the zinc components from the product solution as a mixture of crystallized zinc compounds. These crystallized zinc compounds are separated from the product solution, washed with a wash water at between 25°C and 100°C and then dried at elevated temperatures above 100°C, resulting in a zinc oxide product of 99% or greater purity. In another example, the remaining product solution can be subjected to electrolysis in which zinc metal plates onto the cathode of the electrolysis cell. Any remaining product solution after crystallization or electrolysis is recycled back to treat incoming waste material.

The undissolved material separated from the product solution is rich in iron oxide, and typically has some impurities such as zinc ferrite. The undissolved materials can be used as a feedstock for steel mills so long as the quantity of impurities is not too great. It is preferable, however, to remove the impurities from the iron oxide prior to using the iron oxide as a feedstock. According to the invention reducing the iron oxide to direct-reduced iron (DRI) is mandatory as DRI can be used to replace part or all of the steel scrap charge.

Prior to be leached by the ammonium chloride solution, the waste material, typically including franklinite and magnetite, is roasted preferably at temperatures greater than 500°C for a predetermined period of time. The roasting process generally comprises the steps of adding heat to the waste material and/or passing heated reducing gases through the waste material and causes a decomposition of the franklinite zinc oxide-iron oxide complex into zinc oxide, iron oxide and other components. A rotary hearth furnace has been found to be a suitable vehicle for the roasting process. Although all reducing gases are suitable, hydrogen and carbon-containing gases such as carbon dioxide are preferred, as well as mixing carbon (activated) with the material and roasting in a gas containing oxygen.

In the cementation step, lead, cadmium and copper plate out on zinc particles introduced into the solution, thereby forming a cake of waste metals which is filtered and removed from the solution. This waste metals cake may be further processed to separate and purify component elements such as lead and copper, which may then be sold as products. The waste metal cake is washed with water and transferred to a vessel containing sulfuric acid. The sulfuric acid will dissolve zinc, cadmium and copper present in the waste metal cake. Lead metal, however, is not soluble in sulfuric acid and any lead oxide present in the cake will dissolve and reprecipitate as lead sulfate. The resulting solid is filtered, washed with water, and dried under nitrogen. This solid is mainly lead metal having trace impurities of lead oxide, lead sulfate, copper, zinc and cadmium. This lead metal may be resold, and is suitable for a variety of uses. The remaining sulfuric acid solution contains cadmium and zinc with small amounts of copper. The cadmium may be removed electrochemically by placing zinc metal sheets in the solution to produce a cadmium sponge, which is suitable for resale as a product. Alternatively, electrolysis can be used to recover the cadmium. The remaining solution is mainly zinc and sulfuric acid, which may be recycled into the primary leach solution to eventually recover the zinc as zinc oxide.

The filtrate from the cementation step is hot (90-110°C) and contains a large amount of dissolved zinc with small amounts of trace impurities. Upon controlled cooling of the solution, crystals of zinc salts begin to appear. Control of the cooling rate and temperature versus time profile is important in controlling the size distribution of the crystals and in reducing or eliminating many of the impurities which might occur. This is especially true of the included solution; control of the crystallization can reduce this to virtually zero. In addition, since crystallization is based on differential solubility, and none of the impurities is present in a concentration which can crystallize, the zinc salts are virtually free of any metal impurities.

Iron-poor and iron-rich waste materials may be added to the waste stream. The preferred iron-poor waste feed stream is taken from fumes emanating from industrial processes. For example, fumes from reduction furnaces and from the iron and steel making processes typically are filtered in baghouses. Other industrial processes also produce fumes which may be filtered in baghouses. The waste product removed from the fumes in the baghouses may be subjected to the present process for recovery of chemical values and production of an iron-rich product. Likewise, the fumes emanating from direct-reduced iron reduction furnaces may be filtered, with the filtrate recycled to the present process. Alternatively, the fumes may be cleaned using a recirculating water or ammonium chloride solution wet scrubber. The loaded recirculating water or ammonium chloride solution (the scrubbant) may be recycled to the ammonium chloride leach step of the present invention, as discussed below.

Iron-rich waste materials can be added to the combination waste stream to help dispose of such iron-rich waste materials and to produce an iron-based feedstock having an even higher percentage of iron. The use of mill scale as an iron-enhancer in the iron and steel making processes is contrary to common technology, as mill scale is considered a waste product or impurity. Likewise with used batteries. By adding the iron oxide rich material to the EAF dust, and treating the combined waste material, a resultant iron-rich feedstock is produced, suitable as a feedstock to the iron and steel making processes.

The iron oxide in the undissolved materials can be reduced to DRI in several manners. First, the undissolved materials may be subjected to a high temperature roasting step, in the $980°C$ to $1315°C$ range, to reduce the iron oxide present in the undissolved materials to DRI. Roasting at this elevated temperature oxidizes and/or drives off the majority of the remaining impurities. To assist in the formation of a more usable DRI, the undissolved materials can be pelletized with carbon or sodium silicate, or another suitable material, at the end of or after the roasting step. Second, carbon, in the form of activated carbon, carbon dust, carbon pellets or the like, can be introduced to the ammonium chloride and waste material mixture during the leaching process. Third, carbon can be introduced to the dried undissolved material cake. When the iron oxide and carbon are heated under a reducing atmosphere, such as CO or $CO_2$ or other common reducing gases, the carbon will react with the iron oxide, assisting in reducing the iron oxide to DRI. Combining any of these methods can result in an even purer DRI product.

The present invention also provides a method by which iron-rich by-products produced by the recovery process are reduced in a reduction furnace which reduces the iron oxide to DRI. Fumes exhausted by the reduction furnace are filtered through a baghouse or/and a wet scrubber. The materials captured by the baghouse or/and wet scrubber may then be recycled back into the leaching step of the recovery process of the present invention where they are used in the recovery process. The solid particles captured by the baghouse may be combined with the primary waste stream feed, such as EAF dust, or, alternatively, fed as a separate primary feed to the ammonium chloride leach. The loaded scrubbant liquid from the wet scrubber may be combined with the primary ammonium chloride leachant or, alternatively, if an ammonium chloride solution is used as the scrubbing liquid, used as the primary ammonium chloride leachant.

Fumes exhausted from the reduction furnace used to reduce the iron-rich materials into DRI are fed to a baghouse or/and a wet scrubber containing a heated ammonium chloride solution. The fumes, which typically are iron poor, consist primarily of zinc, lead, and cadmium. The materials captured through the baghouse or wet scrubber filtering process may then be recycled back into the leaching step of the recovery process of the present invention. If the fumes are filtered through a baghouse, the captured materials will be solids which are placed into the waste material stream whereby they are added to the ammonium chloride solution of the leaching step. If the fumes are filtered through a wet scrubber, the captured materials will be discharged from the wet scrubber in a liquid stream directly into the ammonium chloride solution of the leaching step. Alternatively, if ammonium chloride is used as the scrubbing liquid, the ammonium chloride scrubbant may be used as the leaching (digesting) solution.

Due to the continuous nature of the process, calcium impurities may build up, resulting in lower efficiency. The use of a secondary ammonium salt, different from ammonium chloride, helps alleviate this calcium impurity build up, maintaining efficiency. Calcium present in the fumes may be leached by the ammonium chloride solution. A build up of calcium in the ammonium chloride leach will reduce the ability of the ammonium chloride to leach zinc from the waste material. A secondary ammonium salt such as, preferably, ammonium sulfate or ammonium hydroxide, is added to the leach tank prior to charging with the waste material to precipitate out the calcium ions as calcium sulfate. The loaded recirculating water or ammonium chloride solution (the scrubbant) then may be recycled to the ammonium chloride leach step of the present invention, as discussed below, without creating a calcium build up in the scrubbant.

## DETAILED DESCRIPTION OF A PREFERRED EMBODIMENT

The method for recovering chemical and metal values disclosed herein is carried out in its best mode in recovering these materials from the waste streams of industrial or other processes. A typical industrial waste stream used is a flue gas such as electric arc furnace (EAF) dust where the charge contains galvanized steel, having the following percent composition:

TABLE I

| Analysis of Flue Dust | |
| --- | --- |
| **Component** | **Weight Percent** |
| zinc oxide | 39.64 |
| iron oxide | 36.74 |
| lead oxide | 5.72 |
| inert materials[1] | 9.10 |
| calcium oxide | 2.80 |
| potassium oxide | 2.41 |
| manganese oxide | 1.29 |
| tin oxide | 1.13 |
| aluminum oxide | 0.38 |
| magnesium oxide | 0.33 |
| chromium oxide | 0.16 |
| copper oxide | 0.06 |
| silver | 0.05 |
| unidentified materials[2] | 0.22 |
| TOTAL | 100.00 |

[1] siliceous material, such as slag, with carbon granules occluded.

[2] molybdenum, antimony, indium, cadmium, germanium, bismuth, titanium, nickel and boron.

**General Process Description**

Generally, the present process is a continuous method for the recovery of zinc oxide and iron-containing compounds from waste material streams which comprise zinc compounds, comprising the intitial steps of:

a. roasting the waste material at an elevated temperature and in a reducing atmosphere and in the presence of carbon in part to reduce any iron oxides in the waste material to direct reduced iron (DRI) and to prepare the waste material for further chemical and metal values recovery;

b. treating the waste material with an ammonium chloride solution at an elevated temperature to form a product solution which comprises dissolved zinc and dissolved zinc oxide whereby any iron oxide in the waste material will not go into solution;

c. separating the product solution from any undissolved materials present in the product solution including any of the iron oxide;

d. adding zinc metal and a dispersant to the product solution whereby any lead and cadmium ions contained within the product solution are displaced by the zinc metal and precipitate out of the product solution as lead and cadmium metals and the dispersant is selected from the group consisting of dispersants which will prevent the aggregation of said zinc metal;

e. separating the product solution from the lead and cadmium metals which may be subjected to further processing, thus allowing their purification and recovery;

f. further treating the product solution to recover zinc compounds and other chemical and metal values; and

g. further treating the undissolved materials to recover an iron product suitable for use as the feedstock to a steel mill.

This portion of the present process also can comprise a two-stage leaching process for even greater yields of zinc oxide. The two-stage process comprises the steps of:

a. treating the waste material a first time with an ammonium chloride solution at an elevated temperature to form a first product solution which comprises dissolved zinc constituents whereby any iron oxide in the waste material will not go into solution;

b. separating the first product solution from the undissolved waste material compounds present in the first product solution including any of the iron oxide;

c. roasting the undissolved waste material compounds at an elevated temperature and in a reducing atmosphere in the presence of carbon;

d. treating the roasted undissolved waste material compounds a second time with the ammonium chloride solution at an elevated temperature to form a second product solution which comprises dissolved zinc constituents whereby any iron oxide remaining in the roasted undissolved waste material compounds will not go into solution;

e. combining the first and second product solutions to form a combined product solution; and then

f. carrying out steps d - g of the General Process disclosed above.

An ammonium chloride solution in water is prepared in known quantities and concentrations. If the two-stage leaching process is used, the feed material which contains the zinc species, such as the waste material flue dust described in Table I or any other feed material source which contains zinc or zinc oxide mixed with other metals, is added to the ammonium chloride solution at a temperature of about 90°C or above. Otherwise, the feed material is roasted. The zinc and/or zinc oxide dissolves in the ammonium chloride solution along with other metal oxides, such as lead oxide and cadmium oxide. The iron oxide does not dissolve in the ammonium chloride solution. The solubility of zinc oxide in ammonium chloride solutions is shown in Table II.

TABLE II

| Solubility of ZnO in 23% $NH_4Cl$ solution | |
| --- | --- |
| Temperature °C | g Dissolved/100 g $H_2O$ |
| 90 | 14.6 |
| 80 | 13.3 |
| 70 | 8.4 |
| 60 | 5.0 |
| 50 | 3.7 |
| 40 | 2.3 |

A 23% by weight ammonium chloride solution in water at a temperature of at least 90°C provides the best solubility of zinc oxide and has been chosen as the preferred ammonium chloride solution concentration. Concentrations of ammonium chloride below about 23% do not dissolve the maximum amount of zinc oxide from the flue dust, and concentrations of ammonium chloride above about 23% tend to precipitate out ammonium chloride along with the zinc oxide when the solution is cooled. Iron oxide and inert materials such as silicates will not dissolve in the preferred solution.

The zinc oxide, as well as smaller concentrations of lead or cadmium oxide, are removed from the initial dust by the dissolution in the ammonium chloride solution. The solid remaining after this leaching step contains zinc, iron, lead and cadmium, and possibly some other impurities. The remaining solid then is roasted in a reducing atmosphere in the presence of carbon, typically at a temperature greater than 420°C and often at 700°C to 900°C. The reducing atmosphere can be created by using hydrogen gas, simple carbon species gases such as carbon dioxide, or by heating the material in an oxygen containing gas in the presence of elemental carbon. The carbon preferably is in the form of dust or pellets. Typical roasting times are from 30 minutes to 4 hours. As discussed above, the waste dust first may be roasted and second may be leached. Alternatively the roasting step is carried out in between two leaching steps.

After the dust has been roasted, it is leached in the 23% ammonium chloride solution at a temperature of at least 90°C. Any zinc or zinc oxide formed during the roasting step dissolves in the ammonium chloride solution. The zinc oxide containing ammonium chloride solution then is filtered to remove any undissolved material, including the iron oxide. While the filtered zinc oxide and ammonium chloride solution is still at a temperature of 90°C or above, finely powdered zinc metal is added to the solution. Through an electrochemical reaction, any lead metal and cadmium in solution plates out onto the surfaces of the zinc metal particles. The addition of sufficient powdered zinc metal results in the removal of virtually all of the lead of the solution. The solution then is filtered to remove the solid lead, zinc and cadmium.

To help keep the zinc powder suspended in the zinc oxide and ammonium chloride solution, water soluble polymers which act as antiflocculants or dispersants may be added. Surface-active materials also will act to keep the zinc powder suspended, as will many compounds used in scale control. These materials only need be present in concentrations of 10 - 1000 ppm. Various suitable materials include water soluble polymer dispersants, scale controllers, and surfactants, such as lignosulfonates, polyphosphates, polyacrylates, polymethacrylates, maleic anhydride copolymers, polymaleic anhydride, phosphate esters and phosponates. A discussion of these various materials can be found in the literature, such as Drew, Principles of Industrial Waste Treatment, pages 79-84, which is incorporated herein by reference. Flocon 100 and other members of the Flocon series of maleic-based acrylic oligomers of various molecular weights of water soluble polymers, produced by FMC Corporation, are effective. Adding the dispersants to a very high ionic strength solution containing a wide variety of ionic species is anathema to standard practice as dispersants often are not soluble in such high ionic strength solutions.

This cementation step preferably is carried out by adding approximately two times the stoichiometric amount of zinc and dispersant. After this initial striking step, the lead, cadmium and copper concentration remaining in the solution is monitored. A second polishing step may then be performed by adding a small amount of powdered zinc and dispersant as necessary.

At this stage there is a filtrate rich in zinc compounds and a precipitate of lead, cadmium and other products. To recover zinc oxide, the filtrate then is cooled to a temperature of between about 20°C and 60°C resulting in the crystallization of a mixture of zinc compounds. The mixture contains a significant amount of diamino zinc dichloride, or other complex compounds which involves zinc amino complexes, hydrated zinc oxides and hydroxide species. Crystallization helps to achieve a high purity zinc oxide of controlled particle size, typically through control of the temperature-time cooling profile. Reverse natural cooling, that is cooling the solution slower at the beginning of the cooling period and faster at the end of the cooling period, is preferred to control the nucleation to crystal growth ratio and, ultimately, the crystal size distribution. The precipitated crystallized solid is filtered from the solution and washed with water at a temperature of between about 25°C and 100°C. The filtered solution is recycled for further charging with feed material. The solubility of diamino zinc dichloride in water is shown in Table III.

TABLE III

| Solubility of $Zn(NH_3)_2Cl_2$ in water | |
| --- | --- |
| Temperature °C | g Dissolved/100 g $H_2O$ |
| 90 | 32 |
| 80 | 24 |
| 40 | 21 |
| 25 | 12.8 |

Very little of the hydrated zinc oxide dissolves in the water. This solution is then filtered to remove the hydrated zinc oxide species, which are placed in a drying oven at a temperature of over 100°C. After a sufficient drying period, the resultant dry white powder is essentially pure zinc oxide. The filtrate from the solution is recycled for charging with additional zinc compound mixture.

The zinc oxide may be dried at approximately 100°C. To ensure that the material is free of chloride, however, it is preferable to heat the zinc oxide to a higher temperature. Diamino zinc dichloride decomposes at 271°C and ammonium chloride sublimes at 340°C. Therefore, heating the zinc oxide to a temperature between 271°C and approximately 350°C to prevent the sublimation of significant amounts of ammonium chloride is preferred. Typically, the zinc oxide should be dried in this temperature range for approximately 2 to 60 minutes, and preferably from 5 to 20 minutes. A 10 minute drying time has been found to be a satisfactory average.

As the zinc, lead and cadmium contained in the feed materials are amphoteric species, by using ammonium chloride solution these species will go into solution, while any iron oxide present in the feed material will not go into solution. Other solutions, such as strong basic solutions having a pH greater than about 10 or strong acidic solutions having a pH less than about 3, also can be used to dissolve the zinc, lead and cadmium species; however, if strong acidic solutions are used, iron oxide will dissolve into the solution, and if strong basic solutions are used, iron oxide will become gelatinous. The lead and cadmium can be removed from the ammonium chloride solution through an electrochemical reaction which results in the precipitation of lead and cadmium in elemental form. The difference in solubility between diamino zinc dichloride and zinc oxide in water and in ammonium chloride solutions allows the selective dissolution of the diamino zinc dichloride such that pure zinc oxide can be recovered. This also can be used in the crystallization step to improve the relative amounts of diamino zinc dichloride and zinc oxide species form. Significantly, all of the zinc can be recycled so that all of the zinc eventually will be converted into zinc oxide.

## Recovering An Iron Feedstock

By taking the undissolved precipitate, which is for the most part iron oxides, and roasting it at elevated temperatures under a reducing atmosphere, a product can be made which is equivalent to DRI. In general terms, heating the iron cake above 980°C up to about 1260°C, and typically no higher than 1315°C, a DRI product is formed. This DRI product then can be pelletized with carbon or with a sodium silicate, or other suitable compound, after it comes out of the furnace. The final product then can be used as a feedstock for steel mills without any additional treatment. Roasting the undissolved precipitate reduces the iron oxide and drives off any zinc, cadmium, and lead, and other impurities. The resulting iron product may have been reduced from several forms of the iron, such as FeO, $Fe_2O_3$, or $Fe_3O_4$, reduced to an iron extremely usable as the feedstock for steel mills.

Iron-rich materials, for example, mill scale or used batteries, also may be added to the waste material to be leached and further processed. During the roasting of the undissolved precipitate, the bond to the non-leachable zinc oxide-iron oxide complex, contained in the undissolved precipitate is broken, and the zinc oxide compounds are exhausted in the off gas and captured in a pollution control device, such as a baghouse, leaving the iron oxide cake as the residue. The iron oxide cake is roasted at an elevated temperature, causing the reduction of the iron oxide, leaving the iron metal values. The iron then can be mixed with a binder and formed into briquettes or cubes to be used as the feedstock. The exhausted impurities then can be recycled to recover, for example, zinc oxide, cadmium metal, and lead metal.

The present process is carried out in its best mode in recovering the waste material from the waste streams of industrial or other processes, and combining it with waste material recovered from furnace exhaust streams. Many processes produce an iron poor waste stream, such as reduction furnaces and iron and steel making processes. Many other processes produce an iron oxide rich waste stream. Other processes remove iron oxide rich materials prior to processing. The iron poor materials are combined with a typical industrial waste stream which, after treatment, results in an iron-rich material suitable for use as a feedstock to a steel mill.

**Preroasting**

The preroasting step is carried out prior to the initial leaching step, or between a first and second leaching step, or both. The waste dust or the combination of waste dust and the iron oxide rich material, is heated to temperatures greater than 500°C in the presence of carbon. This temperature causes a reaction which causes a decomposition of the stable franklinite phase into zinc oxide and other components, and yet does not allow for the complete reduction of zinc oxide to zinc metal. The resulting zinc oxide can be removed by sublimation or extraction with an ammonium chloride solution. The resulting material after extraction has less than 1% by weight zinc.

The solid waste material can be preroasted using many conventional roasting processes, such as, for example, rotary hearth furnaces, direct or indirect heating and the passing of hot gases through the dust. For example, non-explosive mixtures of reducing gases, such as hydrogen gas and nitrogen or carbon dioxide, can be passed through the powder containing franklinite and magnetite. Hydrogen gas is not the only species that may be used for reductive decomposition of franklinite. It is possible to use carbon or simple carbon containing species, including carbon-containing reducing gases and elemental carbon. Heterogeneous gas phase reductions are faster than solid state reductions at lower temperatures and therefore suggest the use of carbon monoxide. The carbon monoxide can be generated in situ by mixing the franklinite powder with carbon and heating in the presence of oxygen at elevated temperatures. The oxygen concentration is controlled to optimize CO production. The carbon monoxide may be introduced as a separate source to more clearly separate the rate of carbon monoxide preparation from the rate of Franklinite decomposition. The prepared zinc oxide then can be removed by either ammonium chloride extraction or sublimation.

**Carbon Addition**

The present process also can be operated to produce a high-quality iron-carbon cake as a residual product. The iron oxide contained in the waste stream does not go into solution in the ammonium chloride solution, but is filtered from the product solution as undissolved material. This iron oxide cake can be used as the feedstock to a steel mill; however, as previously discussed, it becomes more valuable if reduced by reaction with elemental carbon to produce an iron-carbon or DRI product.

A mixture of iron oxide and carbon is used by the steel industry as a feedstock for electric arc furnaces. The iron oxide cake which is removed as undissolved material from the leaching step is primarily iron oxide, being a mixture of $Fe_2O_3$ and $Fe_3O_4$. The iron oxide cake can be treated in three manners. First, carbon can be added to the leaching step and the iron oxide cake will have carbon plus iron oxide. The iron oxide-carbon cake can go directly to the steel mill and, if it goes directly to the steel mill, then the reduction of the iron oxide would take place in the steel mill furnace. Second, the iron oxide-carbon cake can be pelletized and roasted in a reduction furnace to form DRI. The iron oxide precipitate, which typically contains around 80% solids, is ground up with carbon and formed into pellets, briquettes or cubes and then heated. These pellets, briquettes or cubes then can be introduced to a steel making furnace. The difference in the material that would be introduced to the furnace from the first manner and the second manner is that in the second manner, DRI is introduced to the steel making furnace, while in the first manner, a combination of iron oxide and carbon is introduced to the steel making furnace. The iron oxide plus carbon can be supplied to the steel mill as is. When this carbon enriched iron oxide is melted, it forms a foamy slag, and a foamy slag is desirable in steel making. Third, the carbon can be added through a ribbon blender, and then the iron oxide-carbon cake can be introduced either directly into the furnace or, preferably roasted in a reduction furnace first to form DRI, which would be preferred for steel making.

Combining carbon and iron oxide in a reducing atmosphere and at an elevated temperature results in the reduction of the iron oxide, producing DRI. DRI can be used to replace part or all of the steel scrap charged to a steel mill. In some operations, DRI is preferred to scrap because it has a known uniform composition and generally contains no residual elements such as chromium, copper, nickel, and tin. When carbon-enriched iron oxide is melted, it forms a desired foamy slag because it contains both carbon and iron oxide. Because the price of steel scrap usually is lower than DRI, the use of DRI usually cannot be economically justified. DRI typically runs in the $120.00 and higher per ton range. However, since the iron oxide is a residual product of an economical recovery process, such as the recovery of zinc oxide from flue dust described generally below, with the main value of the process being from the zinc oxide product, the iron oxide or DRI can be produced more economically. Therefore, the iron oxide produced as a residual in this process has significant value.

Generally the iron oxide and carbon product is pressed into a cake for ease of handling and use. The cake typically contains approximately 82% solids, but may range from 78% to 86% solids and be easily handled and used. Although cakes of less than 78% solids can be formed, the other 22%+ of material would be product solution which, if the cake is used as a feedstock to a steel mill, would be reintroduced to the steelmaking process, which is uneconomical. Likewise, drying the cake to have more than 86% solids can be uneconomical.

The roasting process produces vapors, from the zinc, lead, cadmium and other impurities, that have to be condensed into dust. These impurities can be sent to the baghouse at the end of the steel making process, mixed into the original waste dust, and then sent to the first leaching step, in a recycle fashion. Alternatively, the exhaust vapors and dust from the roasting step may be sent to a separate baghouse at a stand alone facility.

In any manner, the fumes exhausting from the steel mill furnace and the reduction furnace typically are iron poor, but comprise other valuable components. The furnace exhaust fumes are an excellent source of iron poor waste materials useful for recovery in the present process. The exhaust fumes may be filtered in a baghouse, with the resulting filtrate being added to the waste stream feed of the present process, or with the resulting filtrate being the primary waste stream feed of the present process. The exhaust fumes also may be scrubbed in a wet scrubber, with the resulting loaded scrubbing solution being added to the ammonium chloride leachant of the present process. If an ammonium chloride scrubbing solution is used instead of water, the loaded ammonium chloride scrubbing solution may be used as the primary leachant of the present process.

**Enhanced Zinc Recovery**

The zinc dust obtained from various sources have shown by chemical analysis to contain from 20% - 25% zinc by weight. Certain crystalline phases exist in this dust, specifically zinc oxide. The positive identification of the iron phase is complicated by the possible structural types (i.e. spinel type iron phases showing almost identical diffraction patterns). The zinc oxide (as well as smaller concentrations of lead or cadmium oxide) are removed from the initial dust by dissolution in a concentrated ammonium chloride solution (23% ammonium chloride).

Filtration and washing of the undissolved species leaves a residual powder. This powder shows a zinc concentration that is still elevated (i.e., 10 - 13% by weight), but that is not zinc oxide. All crystalline phases can be identified by spinel type phases. This powder is a combination of franklinite (Fe, Mn, Zn)(FeMn)$_2$O$_4$, and magnetite (iron oxide: Fe$_3$O$_4$). Both of these phases have very similar spinel type structures. The zinc within the franklinite cannot be removed by dissolution with ammonium chloride. In addition, no simple extraction process will remove zinc from this stable oxide phase. Although this compound is very stable to oxidation (all elements in the highest oxidation state), it is relatively easy to destroy this compound by reduction at elevated temperatures. The reduction of the franklinite in an atmosphere that cannot readily reduce zinc oxide or allow for the rapid oxidation of zinc to zinc oxide following reduction and subsequently recover the zinc oxide by ammonium chloride extraction or sublimation (the highly volatile zinc oxide will sublime from the mixture at relatively low temperatures and recondense at the cold locations of the roaster). The alternative will be complete reduction of the franklinite to zinc metal and removal by distillation or separation of the molten zinc by settling techniques.

**Crystallization**

The purpose of the crystallization/washing step is to produce a high purity zinc oxide of controlled particle size. This is accomplished through control of the temperature-time profile during cooling in the crystallization. The crystallization step in the process takes the filtrate from the cementation step at 90-100°C. This filtrate contains the dissolved zinc with small amounts of trace impurities such as lead and cadmium. In order to prepare a pure zinc oxide it is necessary to prevent the formation of solvent inclusions inside the grown crystals. Solvent inclusions are pockets of liquid trapped as a second phase inside the crystals. Control of crystallization conditions can be employed to reduce these impurities.

**Recycle**

One purpose of this process is to produce pure zinc oxide from waste dust containing zinc. To do so this efficiently and in a safe and cost effective way, the process recycles all zinc which is not removed from the leachate in the crystallization step. In addition, the diamino zinc dichloride which is redissolved in water in the washing step also is recycled. The recycle of zinc increases the overall zinc concentration in liquid solution in the process. This allows the crystallizer to operate at a higher temperature due to the rapid change in zinc oxide solubility with temperature in ammonium chloride solution.

**Recovery Of Lead And Cadmium**

This process also can produce essentially pure lead and cadmium from the waste metals cake filtered out of the solution after the cementation step. Once recovered, these metals can be sold as products suitable for a variety of uses. A preferred method for recovery of these metal byproducts comprises:

a. washing the waste metals cake filtered from the solution after the cementation step with water;
b. treating the waste metals cake with sulfuric acid, which will dissolve zinc, cadmium and copper present in the waste metals cake;
c. removing lead metal, which is insoluble in sulfuric acid, from the solution, dissolving and reprecipitating and lead oxide as lead sulfate; and
d. electrochemically removing dissolved cadmium from the solution by placing zinc metal sheets into the solution onto which the cadmium plates to produce a cadmium sponge.

The lead solids may be filtered, washed with water, and dried under an inert gas such as nitrogen to produce a relatively pure lead metal. Some impurities are present in the form of lead oxide, lead sulfate, copper, zinc, and cadmium. Alternatively, electrolysis may be used to cause cadmium in the solution to plate out as a sponge on other cathodic materials. The solution remaining is mainly zinc in sulfuric acid, which can be recycled back to the leach solution for eventual recovery of the zinc as zinc oxide.

A cake of waste metals is produced during the cementation step when zinc dust added to the ammonium chloride solution causes an electrochemical reaction in which lead, cadmium, and copper atoms plate out on the surface of the zinc dust. The resulting solids are filtered from the solution to produce a cake of waste metals. The waste metals cake is washed with water to remove any remaining solution. The wash water may be purified and recycled. The waste metals cake is then treated with sulfuric acid, which dissolves zinc, cadmium, and copper present in the waste metals cake, with zinc and cadmium dissolving at a more rapid rate than copper present in the cake. Lead metal is not soluble in sulfuric acid, thus lead present in the waste metals cake will remain in solid form.

Preferably, the waste metals cake is leached by the addition of a dilute sulfuric acid solution which forms a slurry. The reaction of the zinc oxide in the dust and the sulfuric acid is exothermic. The reactions of cadmium oxide, copper oxide and lead chloride with the sulfuric acid are relatively slower, with the reaction of copper oxide being the slowest. Lead sulfate is formed which is insoluble and removed by filtration at this point. The cadmium solids obtained from the cementation steps can be dissolved by sulfuric acid resulting in soluble sulfates of zinc and cadmium being formed. The zinc sulfate is recycled to the acid leach. This treatment causes the following major reactions to occur:

$$(1) \qquad ZnO + H_2SO_4 \longrightarrow Zn^{++} + SO_4^{--} + H_2O \text{ (fast, exothermic)}$$

$$(2) \qquad CdO + H_2SO_4 \longrightarrow Cd^{++} + SO_4^{--} + H_2O$$

$$(3) \qquad CuO + H_2SO_4 \longrightarrow Cu^{++} + SO_4^{--} + H_2O \text{ (slower)}$$

$$(4) \qquad PbCl_2 + H_2SO_4 \longrightarrow PbSO_4 \text{ (insoluble)} + HCl$$

Metallic and sulfate ions are formed along with insoluble lead sulfate. Additional sulfuric acid may be added until the solution remains acid (pH<2 and preferably pH~1). In this way, an economical minimum of acid is consumed. The rapid rate of reaction (1) allows this to be done with little delay. Reaction (1) releases a great deal of heat, and external heating of the solution may not be required. Reactions (2) and (3) take longer to go to completion during the leach stage and the levels of Cd and Cu in solution may be monitored. Leaching may continue until all of the extractable copper is dissolved. It is preferable that the leachable Cu and Cd be removed before proceeding. It is preferable also that a water rinse or second dilute leach take place in order to rinse the solids clean of any entrapped ions, and prevent contamination of the next leach steps.

Soluble lead oxide present in these dusts is converted to the highly insoluble lead sulfate. The abundance of sulfate ions present in solution greatly suppresses the solubility of lead ions. Due to reaction (4), the chloride ions are introduced into the leach liquor. Zinc sulfate targeted for the electro-chemical uses must be kept low in chloride, but even so, the high solubility of zinc chloride makes contamination unlikely, and easy to remove by recrystallization. The lead solids are filtered from the solution, washed with water, and dried under nitrogen. This solid is mainly lead metal with some impurities including lead oxide, lead sulfate, copper, zinc, and cadmium.

After filtering out the neutral precipitate, the neutral filtrate solution pH may be adjusted to become slightly acidic (pH 4-5) by the addition of an acid, preferably sulfuric acid. The remaining solution contains cadmium and zinc with small amounts of copper and possibly lead present. The pH of the solution can be adjusted to and maintained at the preferred pH of 4-5 by the addition of zinc oxide. Cadmium present in the solution may be removed electrochemically by placing a sheet of zinc metal into the solution to produce a cadmium sponge by the following reaction:

$$(5) \qquad Cd^{++} + Zn^{o} \longrightarrow Cd^{o} \text{ metal (sponge)} + Zn^{++}$$

Alternatively, electrolysis may be used to recover cadmium present in the solution. This cadmium sponge may be separated from the zinc metal sheet, rinsed and redissolved in sulfuric acid to produce high purity cadmium sulfate by the following reaction:

$$(6) \qquad Cd^{o} + H_2SO_4 \longrightarrow CdSO_4 + H_2 \text{ (slow)}$$

Air oxidation of the cadmium will increase the rate of attack by sulfuric acid solutions, greatly increasing the rate of dissolution, and forming water as the reaction's only byproduct:

$$(7) \qquad CdO + H_2SO_4 \longrightarrow CdSO_4 + H_2O \text{ (fast)}$$

The cadmium sponge product, likewise, may be removed from the zinc sheet and sold directly as cadmium metal.

After removal of the cadmium sponge and zinc sheet, the remaining solution is mainly zinc and sulfuric acid. This solution may be recycled by combining it with the primary leach solution, thus enabling eventual recovery of the zinc as zinc oxide. The sulfate will react with calcium present in the primary leach solution, and will precipitate as calcium sulfate.

**Electrolysis**

This process can recover zinc metal by replacing the crystallization steps with an electrolysis step. The combined product solution from the leaching steps comprises zinc ions in solution as $Zn^{2+}$. When the combined product solution is subjected to electrolysis in an electrolytic cell containing an anode and a cathode, the zinc metal is electrodeposited on the cathode. Although it is preferable to have the cathode made from zinc metal, cathodes of other material also will allow the electrodeposition of zinc metal from the combined product solution.

Any of the electrolysis cells discussed in the literature are suitable, as long as such cells are configured for the electrolysis of zinc ion containing solutions. The two electrodes of the electrolysis cells are connected externally to a power supply capable of impressing a suitable voltage across the electrodes. The zinc ions, being positive in nature, migrate toward the negative electrode, or cathode, where they combine with electrons supplied by the external circuit to form neutral zinc metal atoms. When this happens, the zinc metal, in effect, electroplates onto the cathode. By using a zinc cathode, the entire cathode can be removed and used as necessary as a source of zinc. Alternatively, a cathode on which electroplated zinc metal can be easily removed can be used.

**Periodic Precipitation Of Other Solubles**

The product solution also may contain sodium, potassium, magnesium, calcium, manganese, and other solubles in solution. These solubles can be recovered by introducing an electrolyte either in the leaching step or in the ammonium chloride storage tanks receiving the recycled product solution. As ammonium chloride is used as the leachant, ammonium salts in solution is the preferred electrolyte. For example, if some ammonium sulfate is added, one could precipitate out calcium sulfate. Ammonium sulfate is a preferred electrolyte to add because the process already uses ammonium in the form of ammonium chloride. The preferred electrolytes include ammonium sulfate, ammonium hydroxide, or ammonium carbonate to precipitate out various solubles. Manganese can be removed by the addition of an oxidizing agent such as potassium permanganate or hydrogen peroxide. This oxidation results in soluble $Mn^{2+}$ being oxidized to insoluble $Mn^{4+}$ which will precipitate out as a manganese solid.

**Removal of Calcium Compounds**

Due to the continuous nature of the process, calcium impurities may build up, resulting in lower efficiency. The use of a secondary ammonium salt, different from ammonium chloride, helps alleviate this calcium impurity build up. Calcium present in the fumes may be leached by the ammonium chloride solution. A build up of calcium in the ammonium chloride leach will reduce the ability of the ammonium chloride to leach zinc from the waste material. A secondary ammonium salt such as, preferably, ammonium sulfate or ammonium hydroxide, is added to the leach tank prior to charging with the waste material to precipitate out the calcium ions as calcium sulfate. The loaded recirculating water or ammonium chloride solution (the scrubbant) then may be recycled to the ammonium chloride leach step of the present invention, as discussed below, without creating a calcium build up in the scrubbant.

The addition of a soluble ammonium salt in which the negative ion will form an insoluble compound with calcium will remove calcium from the leach solution and at the same time balance the ammonium and chloride ions. Two such salts are ammonium hydroxide ($NH_4OH$) and ammonium sulfate (($NH_4)_2SO_4$). The addition of ammonium hydroxide will result in the formation of calcium hydroxide which is insoluble. Ammonium hydroxide will increase the system pH thereby resulting in the loss of a substantial amount of ammonia due to shifting the ammonium/ammonia equilibrium as the pH becomes more basic. The addition of ammonium sulfate will result in the formation of calcium sulfate which also is insoluble. Ammonium sulfate will keep the pH close to neutral while precipitating calcium sulfate. The preferred ammonium salt is ammonium sulfate, although other ammonium salts are considered within the scope of this invention. Iron-rich materials also may be added to be leached and further processed.

The calcium in the waste material typically is in the form of lime (CaO) of which some also is leached by the ammonium chloride. In a fresh ammonium chloride solution, the solubility of calcium is relatively low (on the order of 2-3%). The addition of the calcium ion, along with the processing of the leaching solution at various stages in the process, results in the loss of ammonium ion which is converted into ammonia and lost through the ventilation and scrubber system. This loss of ammonium ion unbalances the equilibrium of ammonium and chloride ions and results in the formation of calcium chloride. As the solution is repeatedly recycled, the concentration of calcium (and hence, calcium chloride) rises.

The solubility of zinc (from zinc oxide) in a fresh ammonium chloride solution (20% at 96°C) is about 13%. As shown in Table IV, the increase in the calcium chloride concentration of the leaching solution reduces the solubility of zinc. This drop in zinc solubility makes each leaching successively less effective since a smaller amount of material can be leached through each cycle.

TABLE IV

| Solubility of ZnO in aqueous solution at 96°C | | |
|---|---|---|
| containing | 20% NH4Cl 40% NaCl 34% KCl 1.6% MgCl$_2$ and different quantity of CaCl$_2$ | |
| | CaCl$_2$ Concentration | |
| | 5% | 10% | 15% |
| Saturated solution contains: | | | |
| Calcium | 1.9% | 3.7% | 6.5% |
| Magnesium | 0.4% | 0.4% | 0.46% |
| Sodium | 1.2% | 1.2% | 1.4% |
| Zinc | 10.8% | 8.4% | 4.95% |

As stated above, the addition of ammonium sulfate to the leaching solution is preferred. The ammonium sulfate can be added to the leach tank prior to charging with dust. The calcium sulfate which forms will be filtered out with the iron cake and returned to the steel making furnace. The calcium will calcine to calcium oxide when it is heated during the steel making process.

### Recovery of Ammonium Chloride and Wash Water Purification

The wash water used to wash the zinc compounds precipitated from the product solution contains some ammonium chloride, as well as other compounds. Rather than dispose of this polluted wash water, it can be treated to produce pure water and a more concentrated solution containing ammonium chloride and other compounds. The pure water can be recycled to wash additional zinc compounds precipitated from the product solution, and the concentrated solution can be recycled back to the leaching step. The purification can be accomplished using evaporator condensers or reverse osmosis membrane technology.

From an economically competitive situation, the use of reverse osmosis membrane technology to filter the wash water containing ammonium chloride solution to obtain pure water on one side of the membrane and a concentrated ammonium chloride solution on the other side of the membrane, will save energy costs. Every so often it will be necessary to back flush the salts off of the membrane to recover them for makeup use in the future. In essence, reverse osmosis membrane technology is using a pump to pump the wash water through a membrane, which is significantly lower in cost than burning natural gas in an evaporator condenser to evaporate and recondense distilled water.

### Iron By-Product Recycle

Iron-rich by-products produced during the recovery process can be processed further to obtain an end product which can be recycled back into the leaching step of the recovery process of the present invention. The iron-rich by-products preferably are reduced to DRI in a reduction furnace. During the reduction process, exhausts fumes which consists primarily of zinc, lead and cadmium are produced in the reduction furnace.

In a first embodiment, the DRI is sent to a steel mill where it is used in the production of steel. The steel production process results in exhaust fumes which are processed through the baghouse or/and a wet scrubber, either or both of which can be located at the steel mill. Fumes processed through the baghouse are filtered, and the captured solid residuum, along with an added amount of EAF dust, is recycled back into the waste materials stream whereby it is returned to the leaching step of the recovery process. Fumes processed through the wet scrubber are scrubbed in a liquid stream and the residual impurities obtained from the scrubbing process are discharged from the wet scrubber directly into the ammonium chloride solution of the leaching step.

In a second embodiment, the fumes exhausted from the reduction furnace used to produce the DRI are processed through the baghouse or/and the wet scrubber. Fumes processed through the baghouse are filtered, and the captured solid residuum is recycled back into the waste material stream, whereby it is returned to the ammonium chloride solution of the leaching step. In this embodiment, no EAF dust need be added in with the solid residuum. Fumes processed through the wet scrubber are scrubbed in a liquid stream and the residual impurities obtained from the filtering process are discharged from the wet scrubber directly into the ammonium chloride solution of the leaching step.

Iron-rich products which are produced during the recovery process of the present invention can be further processed to produce fumes consisting primarily of zinc, lead and cadmium which are captured in a baghouse or/and a wet scrubber and recycled back into the ammonium chloride solution of the leaching step to be used in the recovery process. The locations of the baghouse and wet scrubber are a matter of design choice, plant efficiency and convenience. For example, steel mills are equipped with baghouses and wet scrubbers which can be used in the recycling process of the present invention. Similarly, the locations of the baghouse or wet scrubber used to process fumes from the DRI reduction furnace are also a matter of design choice, plant efficiency and convenience.

### Example 1

Prior Art

A metal dust of composition listed in Table I of the Burrows patent is added to 23% by weight $NH_4Cl$ solution (30g $NH_4Cl$ per 100g $H_2O$), as discussed in the Burrows patent, in the amount of 1 gram of dust per 10 grams of solution. The solution is heated to a temperature of 90°C and stirred for a period of 1 hour, during which the zinc oxide in the dust dissolves. The remaining solid, which has a composition of approximately 60% iron oxide, 5% calcium oxide, 5% manganese, 30% other materials, is filtered out of the solution. Powdered zinc then is added to the filtrate at 90°C, causing the precipitation of waste metals, the precipitate containing about 60% lead, 40% zinc, 2% cadmium and 8% other metals. The waste metals then are filtered out and the filtrate is cooled to room temperature (between about 18°C and 30°C) over a period of about two hours. The solution then contains a white precipitate which is not essentially pure zinc oxide but is a mixture of hydrated zinc phases and diamino zinc dichloride.

**Example 1**

A dust containing 19.63% Zn, 27.75% Fe, 1.31% Pb, 9.99% Ca, and 0.024% Cd (analysis based on elements not oxides) was leached at 100°C in a 23% ammonium chloride solution. The solid remaining after the leaching process was dried and analyzed to contain 12.67% Zn, 4.6% Ca, 35.23% Fe, 0.7% Pb, and 0.01% Cd. This material was placed in a quartz boat in the presence of activated carbon and heated at 900°C for two hours in an atmosphere of 95% $N_2$ and 5% $O_2$. After two hours, the material was removed and added to a 23% ammonium chloride solution at 100°C. The material was filtered and dried at 140°C for one hour to determine its composition. Analysis of this remaining solid was 42.84% Fe, 0.28% Zn, < 0.1% Pb, and < 0.01% Cd. The leached-roasted-leached material then can be subjected to the remainder of the general process to recover zinc oxide.

**Claims**

1.   A continuous method for the recovery of metal and chemical values from waste material streams, which comprise iron compounds and zinc compounds, comprising

 -   a leach step for treating with an ammonium chloride solution at elevated temperature to form a product solution which comprises dissolved constituents and an undissolved precipitate, whereby any iron oxide will be contained in the undissolved precipitate; and
 -   a separating step for separating the product solution from the undissolved precipitate;

   **characterized in that**
the method also comprises a preroasting step, prior to the leach step, wherein the waste material is preroasted in the presence of carbon at elevated temperature, resulting in the reduction of the iron oxides into direct reduced iron and the production of exhaust vapors comprising zinc, lead and cadmium compounds, which exhaust vapors are collected and fed as starting material to the leach step.

2.   A method as claimed in claim 1, wherein said waste materials are preroasted at a temperature of at least 500°C.

3.   A method as claimed in claim 2, wherein said waste materials are preroasted in a reducing atmosphere.

4.   A method as claimed in claim 1, wherein said undissolved precipitate is roasted at a temperature of between 980°C and 1315°C.

5.   A method as claimed in claim 1, wherein the concentration of said ammonium chloride solution is 23% by weight.

6.   A method as claimed in claim 5, wherein the ammonium chloride solution is maintained at a temperature of at least 90°C.

7.   A method as claimed in claim 1, wherein zinc metal dust is added to said product solution resulting in the cementation of said lead and said cadmium.

8.   A method as claimed in claim 7, further comprising the step of cooling said product solution resulting in the crystallization of zinc compounds.

9.   A method as claimed in claim 7, further comprising the step of further treating said product solution by electrolysis to remove at least a portion of any remaining zinc component from said product solution as elemental zinc.

10.  A method as claimed in claim 1, wherein said product solution is treated to remove the zinc component by electrolysis thereby removing at least a portion of the zinc component from said product solution as elemental zinc.

11.  A method as claimed in claim 1, wherein said product solution and said undissolved precipitate are further treated to recover valuable components.

# EP 0 783 593 B1

**Patentansprüche**

1. Kontinuierliches Verfahren zum Gewinnen von metallischen und chemischen Wertstoffen aus Abfallmaterialströmen, die Eisenverbindungen und Zinkverbindungen umfassen, umfassend:

   - einen Auslaugungsschritt zur Behandlung mit einer Ammoniumchloridlösung bei erhöhter Temperatur, um eine Produktlösung zu bilden, die gelöste Bestandteile und ein ungelöstes Präzipitat umfasst, wobei alles Eisenoxid in dem ungelösten Präzipitat enthalten ist; und
   - einen Trennungsschritt zum Abtrennen der Produktlösung von dem ungelösten Präzipitat;

   **dadurch gekennzeichnet, dass**

   das Verfahren auch einen Vorröstungsschritt, vor dem Auslaugungsschritt, umfasst, wobei das Abfallmaterial in Gegenwart von Kohle bei erhöhter Temperatur vorgeröstet wird, was zur Reduktion von Eisenoxiden in direkt reduziertes Eisen und zur Produktion von Abdämpfen führt, die Zink-, Blei- und Cadmiumverbindungen umfassen, wobei die Abdämpfe aufgefangen und als Ausgangsmaterial dem Auslaugungsschritt zugeführt werden.

2. Verfahren nach Anspruch 1, wobei die Abfallmaterialien bei einer Temperatur von mindestens 500°C vorgeröstet werden.

3. Verfahren nach Anspruch 2, wobei die Abfallmaterialien in einer reduzierenden Atmosphäre vorgeröstet werden.

4. Verfahren nach Anspruch 1, wobei das ungelöste Präzipitat bei einer Temperatur zwischen 980°C und 1315°C geröstet wird.

5. Verfahren nach Anspruch 1, wobei die Konzentration der Ammoniumchloridlösung 23 Gew.-% ist.

6. Verfahren nach Anspruch 5, wobei die Ammoniumchloridlösung bei einer Temperatur von mindestens 90°C gehalten wird.

7. Verfahren nach Anspruch 1, wobei Zinkmetallstaub der Produktlösung zugesetzt wird, was zur Zementation des Bleis und des Cadmiums führt.

8. Verfahren nach Anspruch 7, das darüber hinaus den Schritt des Kühlens der Produktlösung umfasst, was zu einer Kristallisation der Zinkverbindungen führt.

9. Verfahren nach Anspruch 7, das darüber hinaus den Schritt eines weiteren Behandelns der Produktlösung durch Elektrolyse umfasst, um mindestens einen Teil der gesamten verbleibende Zinkkomponente aus der Produktlösung als elementares Zink zu entfernen.

10. Verfahren nach Anspruch 1, wobei die Produktlösung behandelt wird, um die Zinkkomponente durch Elektrolyse zu entfernen, wodurch zumindest ein Teil der Zinkkomponente aus der Produktlösung als elementares Zink entfernt wird.

11. Verfahren nach Anspruch 1, wobei die Produktlösung und das ungelöste Präzipitat weiterbehandelt werden, um wertvolle Komponenten zu gewinnen.

**Revendications**

1. Procédé continu pour la récupération de composés utiles métalliques et chimiques contenus dans des effluents de déchets qui comprennent des composés de fer et des composés de zinc, comprenant

   une étape de lessivage pour traiter avec une solution de chlorure d'ammonium à haute température pour former une solution du produit qui comprend des constituants dissous et un précipité non dissous, où tout oxyde de fer est contenu dans le précipité non dissous ; et
   une étape de séparation pour séparer la solution du précipité non dissous ;

   **caractérisé en ce que**

le procédé comprend aussi une étape de prégrillage, avant l'étape de lessivage, dans lequel les déchets sont prégrillés en présence de carbone, à haute température, ce qui entraîne la réduction des oxydes de fer en fer réduit directement et la production de vapeurs d'échappement comprenant des composés de zinc, de plomb et de cadmium, les vapeurs d'échappement étant collectées et envoyées comme matière de départ à l'étape de lessivage.

2. Procédé suivant la revendication 1, dans lequel lesdits déchets sont prégrillés à une température d'au moins 500° C.

3. Procédé suivant la revendication 2, dans lequel lesdits déchets sont prégrillés en atmosphère réductrice.

4. Procédé suivant la revendication 1, dans lequel ledit précipité non dissous est grillé à une température comprise entre 980° C et 1315° C.

5. Procédé suivant la revendication 1, dans lequel la concentration de ladite solution de chlorure d'ammonium est de 23 % en poids.

6. Procédé suivant la revendication 5, dans lequel la solution de chlorure d'ammonium est maintenue à une température d'au moins 90° C.

7. Procédé suivant la revendication 1, dans lequel de la poussière de métal de zinc est ajoutée à ladite solution du produit, ce qui entraîne la cémentation dudit plomb et dudit cadmium.

8. Procédé suivant la revendication 7, comprenant encore l'étape de refroidissement de ladite solution du produit, ce qui entraîne la cristallisation des composés de zinc.

9. Procédé suivant la revendication 7, comprenant encore l'étape de traitement supplémentaire de ladite solution du produit par électrolyse pour emporter de ladite solution du produit au moins une partie du composant résiduel de zinc, comme zinc élémentaire.

10. Procédé suivant la revendication 1, dans lequel ladite solution du produit est traitée pour emporter le composant de zinc par électrolyse de manière à emporter de ladite solution du produit une partie du composant de zinc comme zinc élémentaire

11. Procédé suivant la revendication 1, dans lequel ladite solution du produit et ledit précipité non dissous sont encore traités pour récupérer des composants utiles.